# EUROPEAN PATENT SPECIFICATION

(11) **EP 4 332 675 B1**
(45) Date of publication and mention of the grant of the patent: **24.12.2025**
(21) Application number: 22912952.3
(22) Date of filing: 25.02.2022
(51) Int. Cl.: G03B 30/00, H02K 33/18, G03B 9/06

(54) **IRIS DIAPHRAGM DRIVING MOTOR, PHOTOGRAPHING APPARATUS, AND ELECTRONIC DEVICE**
IRISBLENDENANTRIEBSMOTOR, FOTOGRAFIEVORRICHTUNG UND ELEKTRONISCHE VORRICHTUNG
MOTEUR D'ENTRAÎNEMENT DE DIAPHRAGME À IRIS, APPAREIL DE PHOTOGRAPHIE ET DISPOSITIF ÉLECTRONIQUE

(30) Priority: 30.12.2021 CN 202111670322
(43) Date of publication of application: 06.03.2024
(73) Proprietor: Shanghai B.L Electronics Co., Ltd., Shanghai 201712 (CN); Huawei Technologies Co., Ltd., Shenzhen, Guangdong 518129 (CN)
(72) Inventor: GONG, Gaofeng, Shanghai 201712 (CN); WANG, Jianhua, Shanghai 201712 (CN); XIANG, Jianjun, Shanghai 201712 (CN)
(74) Representative: Nederlandsch Octrooibureau
(86) International application number: PCT/CN2022/077797
(87) International publication number: WO 2023/123646

(56) References cited:
- CN-A- 105 763 017
- CN-A- 110 703 534
- CN-A- 111 856 689
- CN-A- 112 666 774
- CN-A- 112 965 317
- CN-A- 113 820 818
- US-A1- 2009 295 983
- US-A1- 2009 296 183
- US-A1- 2020 064 711

## Description

### Technical Field

The present invention relates to the field of camera apparatuses, and in particular, to a variable aperture drive motor, a camera apparatus, and an electronic device.

### Background

Currently, electronic devices such as smart phones and tablet computers have become indispensable electronic products in people's lives. With the continuous development of the electronic device industry, functions of the electronic device gradually become diversified and intelligent, and a photographing function has become one of the essential functions of the electronic device. In an existing electronic device, a camera module may implement the described photographing function. However, the aperture of the camera module is fixed, resulting in a poor photographing effect of the camera module.

Therefore, there is a problem in the prior art that an aperture of a camera module of an electronic device cannot be changed.

Prior art is disclosed in US 2020/064711 A1 from which claim 1 differs in that the support body is a lens support body and in that the motor further comprises first magnetic attraction plates, wherein there are a plurality of first magnetic attraction plates, and the magnetic attraction plates are provided on a bottom end of the base assembly corresponding to the driving magnets. **Summary**

### Technical Problem

### Solution to Problem

### Technical Solution

Some embodiments of the present invention provide a variable aperture drive motor, a camera apparatus, and an electronic device, so as to solve the problem in the prior art that an aperture of a camera module of an electronic device cannot be changed.

In order to achieve the described object, according to one embodiment of the present invention, provided is a variable aperture drive motor, including: a base assembly, the base assembly being provided with an accommodating cavity; a lens support body, at least a part of the lens support body being movably provided inside the accommodating cavity; driving magnets, wherein there are a plurality of driving magnets, the driving magnets are provided on a circumferential side wall of the lens support body, and at least two driving magnets of the plurality of driving magnets are provided symmetrically with respect to the lens support body; driving coils, wherein there are a plurality of driving coils, the driving coils are provided on a side wall of the base assembly corresponding to the driving magnets, and the driving magnets and the driving coils are relatively induced so that the lens support body rotates relative to the base assembly; a blade set, a first end of the blade set being provided on a top end of the base assembly, and a second end of the blade set being connected to the lens support body, so that the second end of the blade set is able to rotate relative to the first end of the blade set; and first magnetic attraction plates, wherein there are a plurality of first magnetic attraction plates, and the first magnetic attraction plates are provided on a bottom end of the base assembly corresponding to the driving magnets.

In an embodiment mode, there is a rotation gap between the lens support body and the base assembly.

In an embodiment mode, the variable aperture drive motor further includes a second magnetic attraction plate, the second magnetic attraction plate is provided on a side of the driving coil away from the driving magnet corresponding to the driving magnet, and the second magnetic attraction plate is provided on a side of the base assembly.

In an embodiment mode, in an optical axis direction of the variable aperture drive motor, a distance from the center of the second magnetic attraction plate to one end of the driving magnet is equal to a distance to the other end thereof.

In an embodiment mode, the variable aperture drive motor further includes an FPC board, the FPC board is provided around a circumferential side wall of the base assembly, a circumferential side wall of the base assembly is provided with a mounting opening, the driving coil is provided on the mounting opening and is connected to the FPC board, and the second magnetic attraction plate is provided on a side of the FPC board away from the driving coil.

In an embodiment mode, the variable aperture drive motor further includes a capacitor and a Hall chip, the capacitor and the Hall chip are both provided on a side of the FPC board close to the driving coil corresponding to the driving magnet.

In an embodiment mode, the number of the driving magnets and the number of the driving coils are both two, the number of the second magnetic attraction plate is one, one of the driving coils corresponds to the second magnetic attraction plate, and the other driving coil corresponds to the capacitor and the Hall chip.

In an embodiment mode, the variable aperture drive motor further includes a plurality of balls, the lens support body is provided with a plurality of accommodating grooves for accommodating the balls, and the side wall of the base assembly is provided with a plurality of sliding grooves extending in a rotation direction of the lens support body corresponding to the accommodating grooves.

In an embodiment mode, some accommodating grooves of the plurality of accommodating grooves are each provided with at least two balls therein, and the balls in the same accommodating groove are arranged in the axial direction of the lens support body.

In an embodiment mode, the plurality of accommodating grooves are grouped in pairs, and at least one group of accommodating grooves is symmetrically provided on two sides of the same driving magnet.

In an embodiment mode, the number of the accommodating grooves is six, the accommodating grooves are divided into three groups, the first group of the accommodating grooves and the third group of the accommodating grooves are provided symmetrically with respect to the center of the lens support body, and the two accommodating grooves of the second group are respectively provided on the sides where the two accommodating grooves of the first group are away from each other; or the two accommodating grooves of the second group are respectively provided on the sides where the two accommodating grooves of the first group are close to each other.

In an embodiment mode, an angle between a connecting line between one of the two accommodating grooves of the second group and the center of the lens support body and a connecting line between the other and the center is less than or equal to 130 degrees.

In an embodiment mode, the accommodating grooves of the first group and the accommodating grooves of the third group are each provided with one ball therein, and the accommodating grooves of the second group are each provided with two balls therein.

In an embodiment mode, spherical centers of the balls in the accommodating grooves of the first group and spherical centers of the balls in the accommodating grooves of the third group are located on the same plane, and the plane is perpendicular to an optical axis of the variable aperture drive motor.

In an embodiment mode, the accommodating grooves of the first group are close to the top end of the base assembly with respect to the bottom end of the base assembly, and the accommodating grooves of the third group are close to the top end of the base assembly with respect to the bottom end of the base assembly.

In an embodiment mode, the second magnetic attraction plate includes a magnetic area and a non-magnetic area, an area of the non-magnetic area is larger than an area of the magnetic area, and the magnetic area and the non-magnetic area are provided sequentially in a rotation direction of the lens support body.

In an embodiment mode, the base assembly includes: a base, the base being provided with an accommodating cavity, and a circumferential side wall of the base being provided with a mounting opening; and a frame, the frame being provided on the base, and the blade set being connected to the frame.

In an embodiment mode, a side of the base facing the frame is provided with first glue dispensing grooves; and/or a side of the base facing the frame is provided with mounting holes, and the frame is provided with mounting posts matching with the mounting holes; and/or the circumferential side wall of the base is provided with first glue dispensing grooves; and/or the circumferential side wall of the base is provided with fixing posts, and the FPC board is provide with fixing holes matching with the fixing posts.

In an embodiment mode, the base has a cylindrical shape and is provided to surround an outer peripheral side of the lens support body; and/or the frame has a ring shape and is provided on a top end of the base.

In an embodiment mode, the variable aperture drive motor further includes a terminal pin, at least one part of the terminal pin is embedded in the base, the other part of the terminal pin protrudes from the end of the base away from the frame, and the other part of the terminal pin protrudes in a direction away from the frame.

In an embodiment mode, an inner wall of a side of the base away from the frame is provided with limiting bosses, the lens support body is provided with limiting grooves matching with the limiting bosses, and the limiting grooves extends in a rotation direction of the lens support body.

In an embodiment mode, the variable aperture drive motor further includes: a cover plate, the cover plate covering a side of the frame away from the base, the blade set being located between the cover plate and the frame, and the base assembly being provided with limiting posts matching with the cover plate and the blade set respectively; and a gasket, the gasket being provided between the blade set and the lens support body, and the lens support body being provided with second glue dispensing grooves corresponding to the gasket.

In an embodiment mode, each of the driving magnets is formed by stacking at least two magnetic strips; or the driving magnets are multi-stage magnetized magnets.

In an embodiment mode, the variable aperture drive motor further includes magnetic blocking sheets, and the magnetic blocking sheets are provided between the lens support body and the driving magnets.

According to another embodiment of the present invention, provided is a camera apparatus, and the camera apparatus includes the described variable aperture drive motor.

According to another embodiment of the present invention, provided is an electronic device, and the electronic device includes the described camera apparatus.

By applying the technical solution of the present invention, the variable aperture drive motor in the present invention includes a base assembly, a lens support body, driving magnets, driving coils, a blade set and first magnetic attraction plates. The base assembly is provided with an accommodating cavity; at least a part of the lens support body is movably provided inside the accommodating cavity; there are a plurality of driving magnets, the driving magnets are provided on the circumferential side wall of the lens support body, and at least two driving magnets of the plurality of driving magnets are symmetrically provided with respect to the lens support body; there are a plurality of driving coils, the driving coils are provided on a side wall of the base assembly corresponding to the driving magnets, and the driving magnets and the driving coils are relatively induced so that the lens support body rotates relative to the base assembly; a first end of the blade set is provided on the top end of the base assembly, and a second end of the blade set is connected to the lens support body, so that the second end of the blade set is able to rotate relative to the first end of the blade set; there are a plurality of first magnetic attraction plates, and the plurality of first magnetic attraction plates are provided on the bottom end of the base assembly corresponding to the driving magnets.

When the variable aperture drive motor in the present invention is used, as the variable aperture drive motor are provided with driving coils and driving magnets, the driving coils are provided on the base assembly, and the driving magnets are provided on the lens support body, after the driving coils are energized, the lens support body is able to rotate relative to the base assembly in the accommodating cavity under the interaction of the driving coils and the driving magnets. Furthermore, during the rotation of the lens support body, the lens support body is able to drive the blade set to rotate, so that the opening diameter of the blade set is able to be changed, and thus the aperture of the camera apparatus is able to be changed. Therefore, the variable aperture drive motor in the present invention effectively solves the problem in the prior art that an aperture of a camera module of an electronic device cannot be changed. Furthermore, as the variable aperture drive motor is further provided with first magnetic attraction plates, it is possible to generate an attraction force on the driving magnets by means of the first magnetic attraction plates, so as to ensure that the lens support body is able to keep in contact with the bottom surface of the base assembly, thereby preventing the lens support body from moving toward the top end of the base assembly due to its own weight when the camera apparatus is in an inverted state.

### Beneficial effects of the disclosure

### Brief Description of the Drawings

The accompanying drawings, which form a part of the present invention, are used to provide a further understanding of the present invention. The exemplary embodiments of the present invention and the description thereof are used to explain the present invention, and do not form improper limits to the present invention. In the drawings.
Fig. 1 is a schematic diagram showing the structure of a variable aperture drive motor according to a specific embodiment of the present invention.
Fig. 2 is an exploded view showing the variable aperture drive motor in Fig. 1.
Fig. 3 is a schematic diagram showing the positional relationship between a lens support body and balls of the variable aperture drive motor in Fig. 1.
Fig. 4 is a schematic diagram showing the positional relationship between a base and a terminal pin of the variable aperture drive motor in Fig. 1.
Fig. 5 is a schematic diagram showing the structure of a frame of the variable aperture drive motor in Fig. 1.
Fig. 6 is a schematic diagram showing the positional relationship between a base and an FPC board of the variable aperture drive motor in Fig. 1.
Fig. 7 is a schematic diagram showing the positional relationship between a lens support body, a frame, and a blade set of the variable aperture drive motor in Fig. 1.
Fig. 8 is a schematic diagram showing the positional relationship between a lens support body, a base, and an FPC board of the variable aperture drive motor in Fig. 1.
Fig. 9 is a simulation diagram showing the thrust force of driving magnets of the variable aperture drive motor after adding magnetic blocking sheets in a specific embodiment of the present invention.
Fig. 10 is a simulation diagram showing the magnetic attraction force, which is generated by driving magnets to a bottom plate, of the variable aperture drive motor in a specific embodiment of the present invention.

The described drawings include the following reference signs.

10: base assembly; 11: mounting opening; 12: sliding groove; 13: base; 131: first glue dispensing groove; 132: mounting hole; 133: fixing post;134, limiting boss; 14, frame; 141, mounting post; 142, limiting column; 20, lens support body; 21, accommodating groove; 22, limiting groove;23, second glue dispensing groove; 30, driving magnet; 40, driving coil; 50, blade set; 60, first magnetic attraction plate; 70, second magnetic attraction plate;71, magnetic area; 72, non-magnetic area; 80, FPC board; 82, Hall chip; 83, fixing hole; 90, ball; 100, terminal pin; 200, cover plate;300, gasket; 400, magnetic blocking sheet.

### Embodiments of the present invention

### Detailed Description of the Embodiments

It should be noted that the embodiments in the present invention and the features in the embodiments can be combined under the condition of no conflicts. The present invention will be described in detail below with reference to the drawings and embodiments.

It should be noted that, unless specified otherwise, all technical and scientific terms used in the present invention have the same meaning as commonly understood by a person skilled in the art to which the present invention belongs.

In the present invention, unless specified otherwise, the directional terms such as "upper", "lower", "top", and "bottom" are generally used for the directions shown in the drawings, or for the components themselves in vertical, perpendicular, or gravitational directions; and similarly, for ease of understanding and description, the terms "inside and outside" refers to the inside and outside relative to the outline of each component itself, but the described directional terms are not intended to limit the present invention.

In order to solve the problem in the prior art that an aperture of a camera module of an electronic device cannot be changed, the present invention provides a variable aperture drive motor, a camera apparatus, and an electronic device.

It should be noted that the electronic apparatus in the present invention has a camera apparatus, and the camera apparatus in the present invention has a variable aperture drive motor described below.

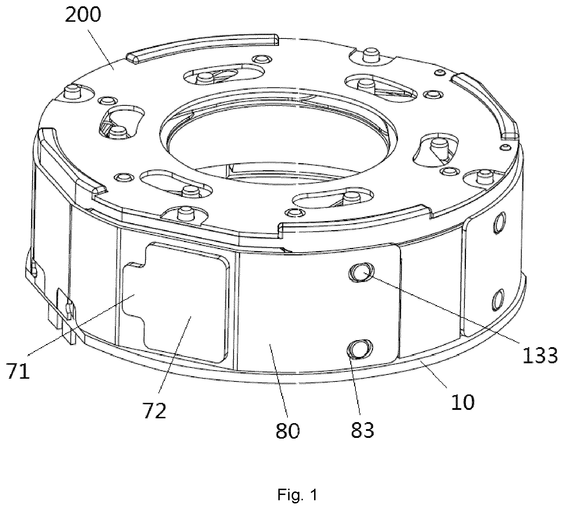

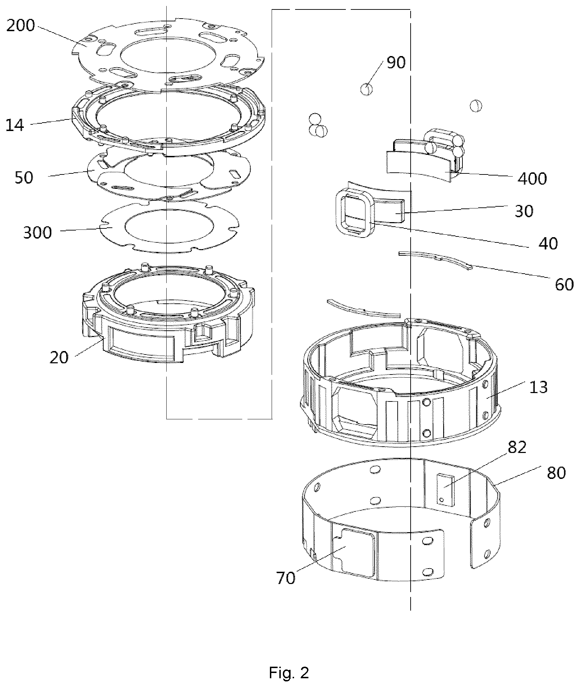

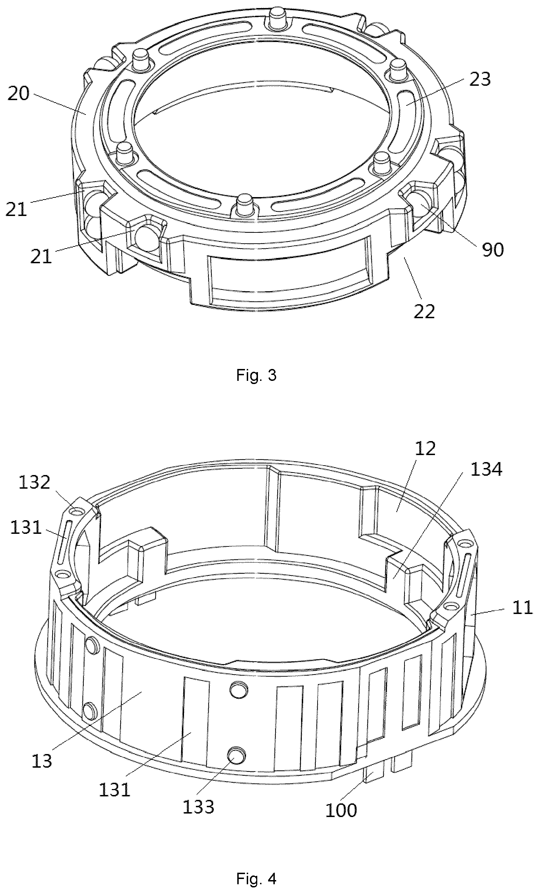

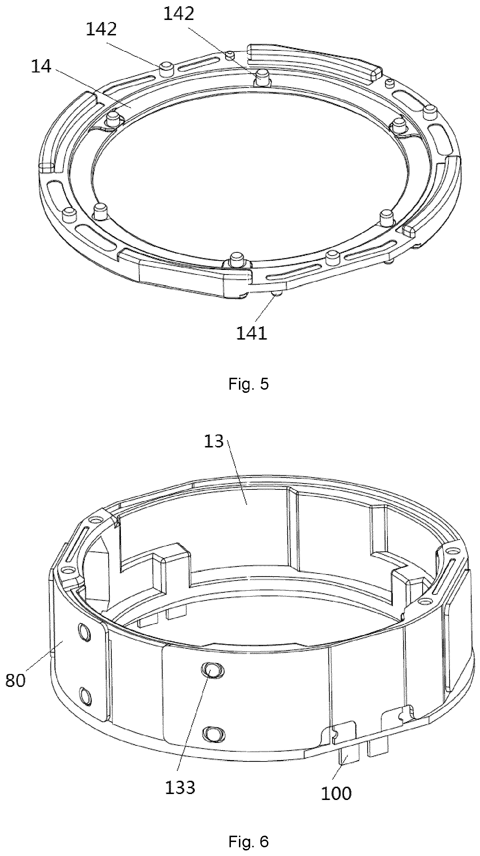

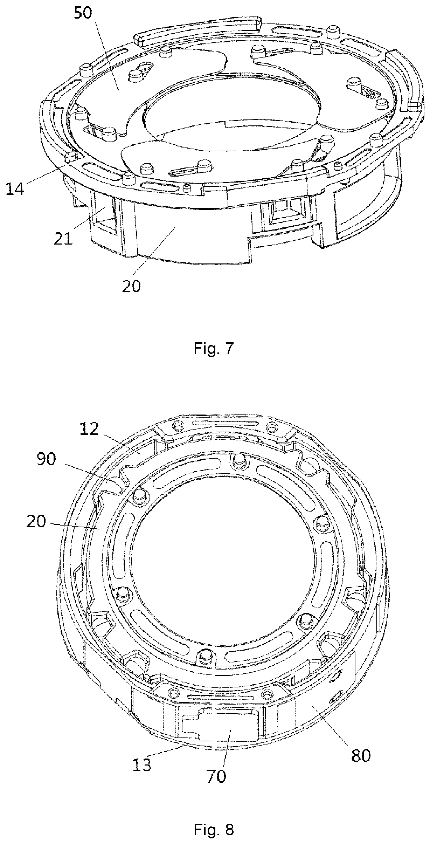

As shown in figures 1-8, the variable aperture drive motor in the present invention includes a base assembly 10, a lens support body 20, driving magnets 30, driving coils 40, a blade set 50 and first magnetic attraction plates 60. The base assembly 10 is provided with an accommodating cavity; at least a part of the lens support body 20 is movably provided inside the accommodating cavity; there are a plurality of driving magnets 30, the driving magnets 30 are provided on a circumferential side wall of the lens support body 20, and at least two driving magnets 30 of the plurality of driving magnets 30 are provided symmetrically with respect to the lens support body 20; there are a plurality of driving coils 40, the driving coils 40 are provided on a side wall of the base assembly 10 corresponding to the driving magnets 30, and the driving magnets 30 and the driving coils 40 are relatively induced so that the lens support body 20 rotates relative to the base assembly 10; a first end of the blade set 50 is provided on a top end of the base assembly 10, and a second end of the blade set 50 is connected to the lens support body 20, so that the second end of the blade set 50 is able to rotate relative to the first end of the blade set 50; there are a plurality of first magnetic attraction plates 60, and the plurality of first magnetic attraction plates 60 are provided on a bottom end of the base assembly 10 corresponding to the driving magnets 30.

When the variable aperture drive motor in the present invention is used, as the variable aperture drive motor is provided with the driving coils 40 and the driving magnets 30, the driving coils 40 are provided on the base assembly 10, and the driving magnets 30 are provided on the lens support body 20, after the driving coils 40 are energized, the lens support body 20 is able to rotate relative to the base assembly 10 in the accommodating cavity under the interaction of the driving coils 40 and the driving magnets 30. Furthermore, during the rotation of the lens support body 20, the lens support body 20 is able to drive the blade set 50 to rotate, so that the opening diameter of the blade set 50 is able to be changed, and thus the aperture of the camera apparatus is able to be changed. Therefore, the variable aperture drive motor in the present invention effectively solves the problem in the prior art that an aperture of a camera module of an electronic device cannot be changed. Furthermore, as the variable aperture drive motor is further provided with first magnetic attraction plates 60, it is possible to generate an attraction force on the driving magnets 30 by means of the first magnetic attraction plates 60, so as to ensure that the lens support body 20 is able to keep in contact with the bottom surface of the base assembly 10, thereby preventing the lens support body 20 from moving toward the top end of the base assembly 10 due to its own weight when the camera apparatus is in an inverted state.

It should be noted that, in the present invention, the top end and the bottom end of the base assembly 10 are defined according to an optical axis direction of the camera apparatus, and in the following embodiments of the present invention, the optical axis direction of the camera apparatus is a vertical direction. Furthermore, the optical axis direction of the camera apparatus is an optical axis direction of the variable aperture drive motor.

In particular, there is a rotation gap between the lens support body 20 and the base assembly 10. It should be noted that, the rotation gap herein refers to a rotation gap between the lens support body 20 and an inner side wall of the base assembly 10. By providing a rotation gap, the friction force between the lens support body 20 and the base assembly 10 is able to be effectively reduced during the rotation of the lens support body 20 relative to the base assembly 10, thereby ensuring the sensitivity of the variable aperture drive motor.

In a specific embodiment of the present present invention, the first magnetic attraction plates 60 are embedded in the bottom end of the base assembly 10.

It should be pointed out that the variable aperture drive motor in the present invention further includes a second magnetic attraction plate 70, the second magnetic attraction plate 70 is provided on a side of the driving coil 40 away from the driving magnet 30 corresponding to the driving magnet 30, and the second magnetic attraction plate 70 is located on a side of the base assembly 10. By providing the second magnetic attraction plate 70, it is possible to provide a radial attraction force for the lens support body 20, so that the first magnetic attraction plates 60, the second magnetic attraction plate 70 and the driving magnets 30 can dynamically "fix" the lens support body 20 from the bottom plate and the side, thereby solving the problem of eccentric rotation and left and right shaking of the lens support body 20, reducing the lateral posture difference, and improving the optical axis accuracy of the lens of the camera apparatus, so as to improve the overall performance of the camera apparatus.

In an embodiment, in the optical axis direction of the variable aperture drive motor, a distance from the center of the second magnetic attraction plate 70 to one end of the driving magnet is equal to a distance to the other end thereof. That is to say, in the present invention, the second magnetic attraction plate 70 is directly opposite to the driving magnet 30, and when the driving coil 40 is not energized, the lens support body 20 is able to only move in the radial direction under the action of the driving magnet 30 and the second magnetic attraction plate 70. In this way, it can be ensured that the lens support body 20 will not experience turning over or axial tilting, thereby ensuring the imaging effect of the camera apparatus. In the present invention, the purpose of ensuring that the second magnetic attraction plate 70 is directly opposite to the driving magnet 30 is to prevent the lens support body 20 from turning over during rotation.

In an embodiment, when the lens support body 20 is in an initial state, the second magnetic attraction plate 70 is directly opposite to an end of the driving magnet 30 in the rotation direction of the lens support body 20, and this end is the front end of the lens support body 20 in the rotation direction. Thus, it is ensured that when the lens support body 20 rotates, the second magnetic attraction plate 70 is able to still directly opposite to the other part of the driving magnet 30, so as to ensure the attraction effect of the second magnetic attraction plate 70 on the driving magnet 30.

In an embodiment, the variable aperture drive motor further includes an FPC board 80, the FPC board 80 is provided around a circumferential side wall of the base assembly 10, the circumferential side wall of the base assembly 10 is provided with a mounting opening 11, the driving coil 40 is provided on the mounting opening 11 and is connected to the FPC board 80, and the second magnetic attraction plate 70 is provided on a side of the FPC board 80 away from the driving coil 40. Furthermore, the variable aperture drive motor further includes a capacitor and a Hall chip 82, and the capacitor and the Hall chip 82 are both provided on a side of the FPC board 80 close to the driving coil 40 corresponding to the driving magnet 30. That is to say, in the present invention, the second magnetic attraction plate 70, the driving coil 40, the capacitor and the Hall chip 82 are all provided on the FPC board 80. In an embodiment of the present invention, the number of the two driving magnets 30 and the number of the driving coils 40 are both two, the number of the second magnetic attraction plate 70 is one, one driving coil 40 corresponds to the second magnetic attraction plate 70, and the other driving coil 40 corresponds to the capacitor and the Hall chip 82. In this way, it may effectively ensure that the second magnetic attraction plate 70 does not interfere with the Hall chip 82 and the capacitor, thereby ensuring the detection effect of the capacitor and the Hall chip 82 on the rotation position of the lens support body 20.

Furthermore, in the present invention, after the driving coil 40 is energized, it interacts with the driving magnet 30 to generate a magnetic thrust force, and the generated magnetic force is a tangential thrust force along the circumference of the carrier, so it is able to push the lens support body 20 to rotate with the optical axis as the rotation axis, thereby pushing the blade set 50 to open and close. In addition, the Hall chip 82 detects the magnetic field intensity of the driving magnet 30 provided oppositely, so as to determine the rotation angle of the lens support body 20, and then controls the driving coil 40 to be supplied with a predetermined current, so that the lens support body 20 rotates to a specific angle, i.e. controls the blade set 50 to open to a specific aperture size.

Certainly, when the internal space of the base assembly 10 or the overall structure of the variable aperture drive motor is limited, the second magnetic attraction plate 70, the capacitor, and the Hall chip 82 are provided corresponding to the same driving magnet 30.

In the present invention, the variable aperture drive motor further includes a plurality of balls 90, the lens support body 20 is provided with a plurality of accommodating grooves 21 for accommodating the balls 90, and the side wall of the base assembly 10 is provided with a plurality of sliding grooves 12 extending in the rotation direction of the lens support body 20 corresponding to the accommodating grooves 21. By providing the balls 90, the friction force between the lens support body 20 and the side wall of the base assembly 10 is able to be further effectively reduced, thereby ensuring the sensitivity of the variable aperture drive motor.

In an embodiment, some accommodating grooves 21 of the plurality of accommodating grooves 21 are each provided with at least two balls therein, and the balls in the same accommodating groove 21 are arranged in the axial direction of the lens support body 20. Furthermore, the plurality of accommodating grooves 21 are grouped in pairs, and at least one group of accommodating grooves 21 is symmetrically provided on two sides of the same driving magnet 30.

In an embodiment of the present invention, the number of the accommodating grooves 21 is six, the accommodating grooves 21 are divided into three groups, the first group of the accommodating grooves 21 and the third group of the accommodating grooves 21 are symmetrically provided with respect to the center of the lens support body 20, and the two accommodating grooves 21 of the second group are respectively provided on the sides where the two accommodating grooves 21 of the first group are away from each other. Furthermore, an angle between a connecting line between one of the two accommodating grooves 21 of the second group and the center of the lens support body 20 and a connecting line between the other and the center is less than or equal to 130 degrees. In addition, the accommodating grooves 21 of the first group and the accommodating grooves 21 of the third group are each provided with one ball 90 therein, and the accommodating grooves 21 of the second group are each provided with two balls 90 therein. A driving magnet 30 is provided both between the two accommodating grooves 21 of the first group and between the two accommodating grooves 21 of the third group, the driving magnet 30 located between the two accommodating grooves 21 of the first group corresponds to the second magnetic attraction plate 70, and the driving magnet 30 located between the two accommodating grooves 21 of the third group corresponds to the capacitor and the Hall chip 82. It should also be noted that, spherical centers of the balls 90 in the accommodating grooves 21 of the first group and spherical centers of the balls 90 in the accommodating grooves 21 of the third group are located on the same plane, and the plane is perpendicular to the optical axis of the variable aperture drive motor. In this embodiment, when the lens support body 20 rotates relative to the base 13, the lens support body 20 may approach the second magnetic attraction plate 70 under the action of the driving magnet 30 and the second magnetic attraction plate 70, thereby ensuring that the optical axis is stable during the rotation of the lens support body 20, and no left and right shaking and no tilting of the optical axis occur. In addition, it is able to also ensure that two groups of vertical balls 90 of the third group of accommodating grooves 21 simultaneously contact and support the corresponding sliding grooves 12 on the base 13, so that the lens support body 20 is able to be limited in the horizontal direction to prevent the lens support body 20 from tilting in the optical axis direction. Furthermore, at this time, the balls 90 in the third group of accommodating grooves 21 may not be in contact with the inner wall surface of the base assembly 10, so that when the variable aperture drive motor is impacted, the balls 90 in the third group of accommodating grooves 21 play the role of anti-collision limit and buffering for the lens support body 20.

Of course, in the present invention, the two accommodating grooves of the second group are respectively provided on the sides where the two accommodating grooves of the first group are close to each other.

In an embodiment, the accommodating grooves 21 of the first group are close to the top end of the base assembly 10 with respect to the bottom end of the base assembly 10, and the accommodating grooves 21 of the third group are close to the top end of the base assembly 10 with respect to the bottom end of the base assembly 10. Such an arrangement may effectively ensure the concentricity and stability of the lens support body 20 during rotation.

In an embodiment, the second magnetic attraction plate 70 includes a magnetic area 71 and a non-magnetic area 72, an area of the non-magnetic area 72 is greater than an area of the magnetic area 71, and the magnetic area 71 and the non-magnetic area 72 are provided sequentially in the rotation direction of the lens support body 20. The purpose of this arrangement is to avoid generating too large attraction force between the second magnetic attraction plate 70 and the driving magnet 30, thereby affecting the rotation of the lens support body 20. Furthermore, in the present invention, a part of the non-magnetic area 72 is able to be used for marking of the FPC board 80. Preferably, the second magnetic attraction plate 70 is a composite plate of SUS430 and SUS305 stainless steel, wherein the magnetic area 71 is made of SUS430 stainless steel, and the non-magnetic area 72 is made of SUS305 stainless steel.

In the present invention, the base assembly 10 includes a base 13 and a frame 14. The base 13 is provided with an accommodating cavity, and a circumferential side wall of the base 13 is provided with a mounting opening 11; and the frame 14 is provided on the base 13, and the blade set 50 is connected to the frame 14. By this arrangement, the strength of the mounting opening 11 is effectively improved, so that the mounting opening 11 has the advantage of not being easily deformed. In addition, by this arrangement, it can also make the frame 14 not easily deformed, thereby ensuring the concentricity of the balls 90.

In an embodiment, a side of the base 13 facing the frame 14 is provided with first glue dispensing grooves 131.

In an embodiment, the side of the base 13 facing the frame 14 is provided with mounting holes 132, and the frame 14 is provided with mounting posts 141 matching with the mounting holes 132.

In an embodiment, a circumferential side wall of the base 13 is provided with the first glue dispensing grooves 131.

In an embodiment, the circumferential side wall of the base 13 is provided with fixing posts 133, and the FPC board 80 is provided with fixing holes 83 matching with the fixing posts 133.

In a specific embodiment of the present present invention, the base 13 has a cylindrical shape and is provided to surround the outer circumferential side of the lens support body 20; and/or the frame 14 has a ring shape and is provided on the top end of the base 13.

In an embodiment, the variable aperture drive motor further includes a terminal pin 100, at least one part of the terminal pin 100 is embedded in the base 13, the other part of the terminal pin 100 protrudes from the end of the base 13 away from the frame 14, and the other part of the terminal pin 100 protrudes in a direction away from the frame 14. By setting the protruding direction of the terminal pin 100 to a direction away from the frame 14, the space occupied by the variable aperture drive motor is effectively reduced, thereby facilitating the miniaturization design of the variable aperture drive motor.

In an embodiment, an inner wall of the side of the base 13 away from the frame 14 is provided with limiting bosses 134, the lens support body 20 is provided with limiting grooves 22 matching with the limiting bosses 134, and the limiting grooves 22 extends in the rotation direction of the lens support body 20. By providing the limiting bosses 134, not only the mounting of the lens support body 20 is positioned, but also the rotation angle of the lens support body 20 is limited, thereby ensuring that the lens support body 20 is able to rotate within a preset angle range. Furthermore, the lens support body 20 is supported by providing the limiting bosses 134.

In the present invention, the variable aperture drive motor further includes a cover plate 200 and a gasket 300. The cover plate 200 covers a side of the frame 14 away from the base 13, the blade set 50 is located between the cover plate 200 and the frame 14, the base assembly 10 is provided with limiting posts 142 respectively matching with the cover plate 200 and the blade set 50, the gasket 300 is provided between the blade set 50 and the lens support body 20, and the lens support body 20 is provided with second glue dispensing grooves 23 corresponding to the gasket 300.

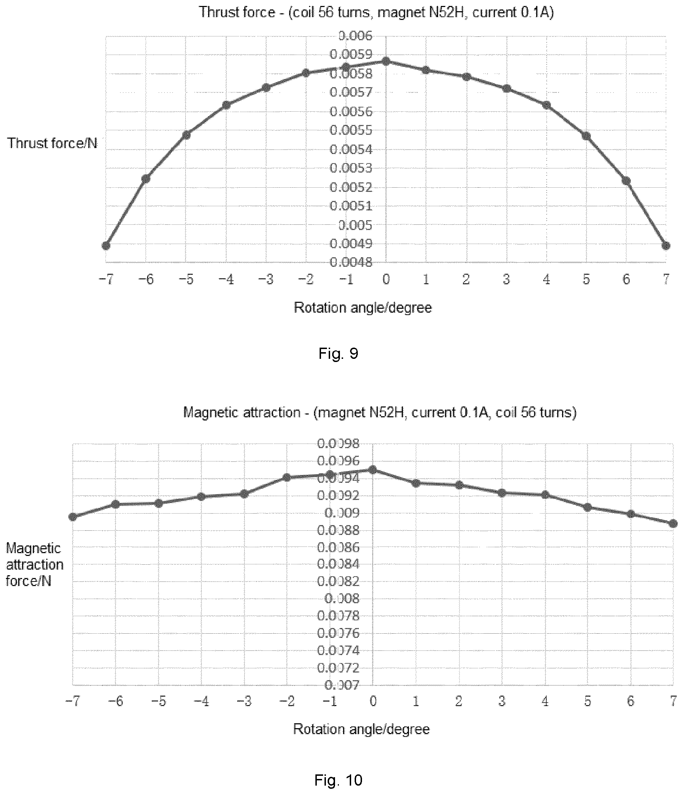

In an embodiment, each driving magnet 30 is formed by stacking at least two magnetic strips; or the driving magnets 30 are multi-stage magnetized magnets. Preferably, the variable aperture drive motor further includes magnetic blocking sheets 400 provided between the lens support body 20 and the driving magnets 30. By this arrangement, the magnetic field distribution of the driving magnets 30 is more uniform and concentrated, and the magnetic field saturation of the limited magnet space is fully utilized, so that the magnetic field intensity is greater, thereby not only generating greater thrust force, but also forming a stable magnetic attraction force. In a particular embodiment of the present invention, each driving magnet is formed by stacking two magnetic strips. As shown in Fig. 9, it is a simulation diagram showing the thrust force of the driving magnets 30 after the magnetic sheets 400 are added in this embodiment. As shown in Fig. 10, it is a simulated line graph showing the magnetic attraction force of the driving magnets 30 to the base plate in this embodiment.

From the description above, it can be determined that the embodiments above of the present invention achieve the following technical effects.
1. The problem that an aperture of a camera module of an electronic device cannot be changed in the prior art is effectively solved.
2. The structure is simple and the performance is stable.

Apparently, the embodiments described above are merely a part rather than all of the embodiments of the present invention. All other embodiments obtained by a person skilled in the art based on the embodiments of the present invention without inventive efforts shall belong to the scope of protection of the present invention.

It should be noted that the terms used herein is for the purpose of describing particular embodiments only and is not intended to be limiting of exemplary embodiments in accordance with the present invention. As used herein, the singular form is intended to include the plural form as well, unless the context clearly indicates otherwise, and further it is to be understood that the terms "include" and/or "comprise", when used in this description, specify the presence of features, steps, operations, devices, components, and/or combinations thereof.

It should be noted that the terms "first" and "second" in the description, claims, and accompanying drawings of the present invention are used to distinguish similar objects, and are not necessarily used to describe a specific sequence or order. It should be understood that the data so used may be interchanged where appropriate so that the embodiments of the present invention described herein can be implemented in sequences other than those illustrated or described herein.

## Claims

1. A variable aperture drive motor, wherein the variable aperture drive motor comprises:
a base assembly (10), the base assembly (10) being provided with an accommodating cavity;
a lens support body (20), at least a part of the lens support body (20) being movably provided inside the accommodating cavity;
driving magnets (30), wherein there are a plurality of driving magnets (30), the driving magnets (30) are provided on a circumferential side wall of the lens support body (20), and at least two driving magnets (30) of the plurality of driving magnets (30) are provided symmetrically with respect to the lens support body (20);
driving coils (40), wherein there are a plurality of driving coils (40), the driving coils (40) are provided on a side wall of the base assembly (10) corresponding to the driving magnets (30), and the driving magnets (30) and the driving coils (40) are relatively induced so that the lens support body (20) rotates relative to the base assembly (10);
a blade set (50), a first end of the blade set (50) being provided on a top end of the base assembly (10), and a second end of the blade set (50) being connected to the lens support body (20), so that the second end of the blade set (50) is able to rotate relative to the first end of the blade set (50); and
first magnetic attraction plates (60), wherein there are a plurality of first magnetic attraction plates (60), and the magnetic attraction plates (60) are provided on a bottom end of the base assembly (10) corresponding to the driving magnets (30).

2. The variable aperture drive motor as claimed in claim 1, wherein there is a rotation gap between the lens support body (20) and the base assembly (10).

3. The variable aperture drive motor as claimed in claim 1, wherein the variable aperture drive motor further comprises a second magnetic attraction plate (70), the second magnetic attraction plate (70) is provided on a side of the driving coil (40) away from the driving magnet (30) corresponding to the driving magnet (30), and the second magnetic attraction plate (70) is located on a side of the base assembly (10).

4. The variable aperture drive motor as claimed in claim 3, wherein
in an optical axis direction of the variable aperture drive motor, a distance from the center of the second magnetic attraction plate (70) to one end of the driving magnet (30) is equal to a distance to the other end thereof; and/or
the second magnetic attraction plate (70) comprises a magnetic area (71) and a non-magnetic area (72), an area of the non-magnetic area (72) is larger than an area of the magnetic area (71), and the magnetic area (71) and the non-magnetic area (72) are provided sequentially in a rotation direction of the lens support body (20).

5. The variable aperture drive motor as claimed in claim 3, wherein the variable aperture drive motor further comprises an FPC board (80), the FPC board (80) is provided around a circumferential side wall of the base assembly (10), a circumferential side wall of the base assembly (10) is provided with a mounting opening (11), the driving coil (40) is provided on the mounting opening (11) and is connected to the FPC board (80), and the second magnetic attraction plate (70) is provided on a side of the FPC board (80) away from the driving coil (40).

6. The variable aperture drive motor as claimed in claim 5, wherein the variable aperture drive motor further comprises a capacitor and a Hall chip (82), and the capacitor and the Hall chip (82) are both provided on a side of the FPC board (80) close to the driving coil (40) corresponding to the driving magnet (30).

7. The variable aperture drive motor as claimed in claim 6, wherein the number of the driving magnets (30) and the number of the driving coils (40) are both two, the number of the second magnetic attraction plate (70) is one, one of the driving coils (40) corresponds to the second magnetic attraction plate (70), and the other driving coil (40) corresponds to the capacitor and the Hall chip (82).

8. The variable aperture drive motor as claimed in claim 1, wherein the variable aperture drive motor further comprises a plurality of balls (90), the lens support body (20) is provided with a plurality of accommodating grooves (21) for accommodating the balls (90), and the side wall of the base assembly (10) is provided with a plurality of sliding grooves (12) extending in a rotation direction of the lens support body (20) corresponding to the accommodating grooves (21).

9. The variable aperture drive motor as claimed in claim 8, wherein some accommodating grooves (21) of the plurality of accommodating grooves (21) are each provided with at least two of the balls (90) therein, and the balls (90) in the same accommodating groove (21) are arranged in the axial direction of the lens support body (20).

10. The variable aperture drive motor as claimed in claim 8, wherein the plurality of accommodating grooves (21) are grouped in pairs, and at least one group of accommodating grooves (21) is symmetrically provided on two sides of the same driving magnet (30).

11. The variable aperture drive motor as claimed in claim 10, wherein the number of the accommodating grooves (21) is six, the accommodating grooves (21) are divided into three groups, the first group of the accommodating grooves (21) and the third group of the accommodating grooves (21) are provided symmetrically with respect to the center of the lens support body (20), and
the two accommodating grooves (21) of the second group are respectively provided on the sides where the two accommodating grooves (21) of the first group are away from each other; or
the two accommodating grooves (21) of the second group are respectively provided on the sides where the two accommodating grooves (21) of the first group are close to each other.

12. The variable aperture drive motor as claimed in claim 11, wherein
an angle between a connecting line between one of the two accommodating grooves (21) of the second group and the center of the lens support body (20) and a connecting line between the other and the center is less than or equal to 130 degrees; and/or
the accommodating grooves (21) of the first group and the accommodating grooves (21) of the third group are each provided with one ball (90) therein, and the accommodating grooves (21) of the second group are each provided with two balls (90) therein; and/or
spherical centers of the balls (90) in the accommodating grooves (21) of the first group and spherical centers of the balls (90) in the accommodating grooves (21) of the third group are located on the same plane, and the plane is perpendicular to an optical axis of the variable aperture drive motor; and/or
the accommodating grooves (21) of the first group are close to the top end of the base assembly (10) with respect to the bottom end of the base assembly (10), and the accommodating grooves (21) of the third group are close to the top end of the base assembly (10) with respect to the bottom end of the base assembly (10).

13. The variable aperture drive motor as claimed in any one of claims 1-12, wherein the base assembly (10) comprises:
a base (13), the base (13) being provided with an accommodating cavity, and a circumferential side wall of the base (13) being provided with a mounting opening (11); and
a frame (14), the frame (14) being provided on the base (13), and the blade set (50) being connected to the frame (14).

14. The variable aperture drive motor as claimed in claim 13, wherein
a side of the base (13) facing the frame (14) is provided with first glue dispensing grooves (131); and/or
a side of the base (13) facing the frame (14) is provided with mounting holes (132), and the frame (14) is provided with mounting posts (141) matching with the mounting holes (132); and/or
the circumferential side wall of the base (13) is provided with first glue dispensing grooves (131); and/or the circumferential side wall of the base (13) is provided with fixing posts (133), and the FPC board (80) is provide with fixing holes (83) matching with the fixing posts (133) ; and/or
the base (13) has a cylindrical shape and is provided to surround an outer peripheral side of the lens support body (20); and/or
the frame (14) has a ring shape and is provided on a top end of the base (13) ; and/or
the variable aperture drive motor further comprises a terminal pin (100), at least one part of the terminal pin (100) is embedded in the base (13), the other part of the terminal pin (100) protrudes from the end of the base (13) away from the frame (14), and the other part of the terminal pin (100) protrudes in a direction away from the frame (14) ; and/or
an inner wall of a side of the base (13) away from the frame (14) is provided with limiting bosses (134), the lens support body (20) is provided with limiting grooves (22) matching with the limiting bosses (134), and the limiting grooves (22) extends in a rotation direction of the lens support body (20) ; and/or
the variable aperture drive motor further comprises:
a cover plate (200), the cover plate (200) covering a side of the frame (14) away from the base (13), the blade set (50) being located between the cover plate (200) and the frame (14), and the base assembly (10) being provided with limiting posts (142) matching with the cover plate (200) and the blade set (50) respectively; and
a gasket (300), the gasket (300) being provided between the blade set (50) and the lens support body (20), and the lens support body (20) being provided with second glue dispensing grooves (23) corresponding to the gasket (300).

15. The variable aperture drive motor as claimed in any one of claims 1-12, wherein
each of the driving magnets (30) is formed by stacking at least two magnetic strips; or the driving magnets (30) are multi-stage magnetized magnets; and/or
the variable aperture drive motor further comprises magnetic blocking sheets (400), and the magnetic blocking sheets (400) are provided between the lens support body (20) and the driving magnets (30).

16. A camera apparatus, wherein the camera apparatus comprises the variable aperture drive motor as claimed in any one of claims 1-15.

17. An electronic device, wherein the electronic device comprises the camera apparatus as claimed in claim 16.

## Patentansprüche

1. Antriebsmotor mit variabler Blende, wobei der Antriebsmotor mit variabler Blende umfasst:
eine Basisanordnung (10), wobei die Basisanordnung (10) mit einer Aufnahmekavität versehen ist; einen Linsenträgerkörper (20), wobei zumindest ein Teil des Linsenträgerkörpers (20) beweglich innerhalb der Aufnahmekavität vorgesehen ist;
Antriebsmagnete (30), wobei es eine Vielzahl von Antriebsmagneten (30) gibt, die Antriebsmagnete (30) an einer Umfangsseitenwand des Linsenträgerkörpers (20) vorgesehen sind und zumindest zwei Antriebsmagnete (30) der Vielzahl von Antriebsmagneten (30) symmetrisch in Bezug auf den Linsenträgerkörper (20) vorgesehen sind;
Antriebsspulen (40), wobei es eine Vielzahl von Antriebsspulen (40) gibt, die Antriebsspulen (40) an einer Seitenwand der Basisanordnung (10) entsprechend den Antriebsmagneten (30) vorgesehen sind und die Antriebsmagnete (30) und die Antriebsspulen (40) relativ induziert werden, so dass der Linsenträgerkörper (20) relativ zur Basisanordnung (10) rotiert;
einen Lamellensatz (50), wobei ein erstes Ende des Lamellensatzes (50) an einem oberen Ende der Basisanordnung (10) vorgesehen ist und ein zweites Ende des Lamellensatzes (50) mit dem Linsenträgerkörper (20) verbunden ist, so dass das zweite Ende des Lamellensatzes (50) in der Lage ist, relativ zum ersten Ende des Lamellensatzes (50) zu rotieren; und
erste Magnetanziehungsplatten (60), wobei es eine Vielzahl von ersten Magnetanziehungsplatten (60) gibt und die Magnetanziehungsplatten (60) an einem unteren Ende der Basisanordnung (10) entsprechend den Antriebsmagneten (30) vorgesehen sind.

2. Antriebsmotor mit variabler Blende nach Anspruch 1, wobei es einen Rotationsspalt zwischen dem Linsenträgerkörper (20) und der Basisanordnung (10) gibt.

3. Antriebsmotor mit variabler Blende nach Anspruch 1, wobei der Antriebsmotor mit variabler Blende ferner eine zweite Magnetanziehungsplatte (70) umfasst, die zweite Magnetanziehungsplatte (70) auf einer Seite der Antriebsspule (40) entfernt vom Antriebsmagneten (30) entsprechend dem Antriebsmagneten (30) vorgesehen ist und die zweite Magnetanziehungsplatte (70) sich auf einer Seite der Basisanordnung (10) befindet.

4. Antriebsmotor mit variabler Blende nach Anspruch 3, wobei
in einer optischen Achsenrichtung des Antriebsmotors mit variabler Blende ein Abstand vom Zentrum der zweiten Magnetanziehungsplatte (70) zu einem Ende des Antriebsmagneten (30) gleich einem Abstand zum anderen Ende davon ist; und/oder
die zweite Magnetanziehungsplatte (70) einen magnetischen Bereich (71) und einen nichtmagnetischen Bereich (72) umfasst, eine Fläche des nichtmagnetischen Bereichs (72) größer als eine Fläche des magnetischen Bereichs (71) ist und der magnetische Bereich (71) und der nichtmagnetische Bereich (72) sequenziell in einer Rotationsrichtung des Linsenträgerkörpers (20) vorgesehen sind.

5. Antriebsmotor mit variabler Blende nach Anspruch 3, wobei der Antriebsmotor mit variabler Blende ferner eine FPC-Platine (80) umfasst, die FPC-Platine (80) um eine Umfangsseitenwand der Basisanordnung (10) herum vorgesehen ist, eine Umfangsseitenwand der Basisanordnung (10) mit einer Montageöffnung (11) versehen ist, die Antriebsspule (40) an der Montageöffnung (11) vorgesehen und mit der FPC-Platine (80) verbunden ist und die zweite Magnetanziehungsplatte (70) auf einer Seite der FPC-Platine (80) entfernt von der Antriebsspule (40) vorgesehen ist.

6. Antriebsmotor mit variabler Blende nach Anspruch 5, wobei der Antriebsmotor mit variabler Blende ferner einen Kondensator und einen Hall-Chip (82) umfasst und der Kondensator und der Hall-Chip (82) beide auf einer Seite der FPC-Platine (80) nahe der Antriebsspule (40) entsprechend dem Antriebsmagneten (30) vorgesehen sind.

7. Antriebsmotor mit variabler Blende nach Anspruch 6, wobei die Anzahl der Antriebsmagnete (30) und die Anzahl der Antriebsspulen (40) beide zwei sind, die Anzahl der zweiten Magnetanziehungsplatte (70) eins ist, eine der Antriebsspulen (40) der zweiten Magnetanziehungsplatte (70) entspricht und die andere Antriebsspule (40) dem Kondensator und dem Hall-Chip (82) entspricht.

8. Antriebsmotor mit variabler Blende nach Anspruch 1, wobei der Antriebsmotor mit variabler Blende ferner eine Vielzahl von Kugeln (90) umfasst, der Linsenträgerkörper (20) mit einer Vielzahl von Aufnahmenuten (21) zur Aufnahme der Kugeln (90) versehen ist und die Seitenwand der Basisanordnung (10) mit einer Vielzahl von Gleitnuten (12) versehen ist, die sich in einer Rotationsrichtung des Linsenträgerkörpers (20) entsprechend den Aufnahmenuten (21) erstrecken.

9. Antriebsmotor mit variabler Blende nach Anspruch 8, wobei einige Aufnahmenuten (21) der Vielzahl von Aufnahmenuten (21) jeweils mit zumindest zwei der Kugeln (90) darin versehen sind und die Kugeln (90) in derselben Aufnahmenut (21) in der axialen Richtung des Linsenträgerkörpers (20) angeordnet sind.

10. Antriebsmotor mit variabler Blende nach Anspruch 8, wobei die Vielzahl von Aufnahmenuten (21) paarweise gruppiert sind und zumindest eine Gruppe von Aufnahmenuten (21) symmetrisch auf zwei Seiten desselben Antriebsmagneten (30) vorgesehen ist.

11. Antriebsmotor mit variabler Blende nach Anspruch 10, wobei die Anzahl der Aufnahmenuten (21) sechs ist, die Aufnahmenuten (21) in drei Gruppen unterteilt sind, die erste Gruppe der Aufnahmenuten (21) und die dritte Gruppe der Aufnahmenuten (21) symmetrisch in Bezug auf das Zentrum des Linsenträgerkörpers (20) vorgesehen sind und
die zwei Aufnahmenuten (21) der zweiten Gruppe jeweils auf den Seiten vorgesehen sind, wo die zwei Aufnahmenuten (21) der ersten Gruppe voneinander entfernt sind; oder
die zwei Aufnahmenuten (21) der zweiten Gruppe jeweils auf den Seiten vorgesehen sind, wo die zwei Aufnahmenuten (21) der ersten Gruppe nahe beieinander sind.

12. Antriebsmotor mit variabler Blende nach Anspruch 11, wobei
ein Winkel zwischen einer Verbindungslinie zwischen einer der zwei Aufnahmenuten (21) der zweiten Gruppe und dem Zentrum des Linsenträgerkörpers (20) und einer Verbindungslinie zwischen der anderen und dem Zentrum kleiner als oder gleich 130 Grad ist; und/oder
die Aufnahmenuten (21) der ersten Gruppe und die Aufnahmenuten (21) der dritten Gruppe jeweils mit einer Kugel (90) darin versehen sind und die Aufnahmenuten (21) der zweiten Gruppe jeweils mit zwei Kugeln (90) darin versehen sind; und/oder
Kugelmittelpunkte der Kugeln (90) in den Aufnahmenuten (21) der ersten Gruppe und Kugelmittelpunkte der Kugeln (90) in den Aufnahmenuten (21) der dritten Gruppe sich auf derselben Ebene befinden und die Ebene senkrecht zu einer optischen Achse des Antriebsmotors mit variabler Blende ist; und/oder
die Aufnahmenuten (21) der ersten Gruppe nahe dem oberen Ende der Basisanordnung (10) in Bezug auf das untere Ende der Basisanordnung (10) sind und die Aufnahmenuten (21) der dritten Gruppe nahe dem oberen Ende der Basisanordnung (10) in Bezug auf das untere Ende der Basisanordnung (10) sind.

13. Antriebsmotor mit variabler Blende nach einem der Ansprüche 1 bis 12, wobei die Basisanordnung (10) umfasst:
eine Basis (13), wobei die Basis (13) mit einer Aufnahmekavität versehen ist und eine Umfangsseitenwand der Basis (13) mit einer Montageöffnung (11) versehen ist; und
einen Rahmen (14), wobei der Rahmen (14) auf der Basis (13) vorgesehen ist und der Lamellensatz (50) mit dem Rahmen (14) verbunden ist.

14. Antriebsmotor mit variabler Blende nach Anspruch 13, wobei
eine Seite der Basis (13), die dem Rahmen (14) zugewandt ist, mit ersten Klebstoffausgabenuten (131) versehen ist; und/oder
eine Seite der Basis (13), die dem Rahmen (14) zugewandt ist, mit Montagelöchern (132) versehen ist und der Rahmen (14) mit Montagepfosten (141) versehen ist, die mit den Montagelöchern (132) übereinstimmen; und/oder
die Umfangsseitenwand der Basis (13) mit ersten Klebstoffausgabenuten (131) versehen ist; und/oder die Umfangsseitenwand der Basis (13) mit Befestigungspfosten (133) versehen ist und die FPC-Platine (80) mit Befestigungslöchern (83) versehen ist, die mit den Befestigungspfosten (133) übereinstimmen; und/oder
die Basis (13) eine zylindrische Form hat und vorgesehen ist, um eine äußere Umfangsseite des Linsenträgerkörpers (20) zu umgeben; und/oder
der Rahmen (14) eine Ringform hat und auf einem oberen Ende der Basis (13) vorgesehen ist; und/oder
der Antriebsmotor mit variabler Blende ferner einen Anschlussstift (100) umfasst, zumindest ein Teil des Anschlussstifts (100) in der Basis (13) eingebettet ist, der andere Teil des Anschlussstifts (100) vom Ende der Basis (13) entfernt vom Rahmen (14) hervorsteht und der andere Teil des Anschlussstifts (100) in einer Richtung weg vom Rahmen (14) hervorsteht; und/oder
eine Innenwand einer Seite der Basis (13) entfernt vom Rahmen (14) mit Begrenzungsvorsprüngen (134) versehen ist, der Linsenträgerkörper (20) mit Begrenzungsnuten (22) versehen ist, die mit den Begrenzungsvorsprüngen (134) übereinstimmen, und die Begrenzungsnuten (22) sich in einer Rotationsrichtung des Linsenträgerkörpers (20) erstrecken; und/oder
der Antriebsmotor mit variabler Blende ferner umfasst:
eine Abdeckplatte (200), wobei die Abdeckplatte (200) eine Seite des Rahmens (14) entfernt von der Basis (13) abdeckt, der Lamellensatz (50) sich zwischen der Abdeckplatte (200) und dem Rahmen (14) befindet und die Basisanordnung (10) mit Begrenzungspfosten (142) versehen ist, die jeweils mit der Abdeckplatte (200) und dem Lamellensatz (50) übereinstimmen; und
eine Dichtung (300), wobei die Dichtung (300) zwischen dem Lamellensatz (50) und dem Linsenträgerkörper (20) vorgesehen ist und der Linsenträgerkörper (20) mit zweiten Klebstoffausgabenuten (23) entsprechend der Dichtung (300) versehen ist.

15. Antriebsmotor mit variabler Blende nach einem der Ansprüche 1 bis 12, wobei
jeder der Antriebsmagnete (30) durch Stapeln von zumindest zwei Magnetstreifen gebildet ist; oder die Antriebsmagnete (30) mehrstufig magnetisierte Magnete sind; und/oder
der Antriebsmotor mit variabler Blende ferner Magnetblockierungsbleche (400) umfasst und die Magnetblockierungsbleche (400) zwischen dem Linsenträgerkörper (20) und den Antriebsmagneten (30) vorgesehen sind.

16. Kameraeinrichtung, wobei die Kameraeinrichtung den Antriebsmotor mit variabler Blende nach einem der Ansprüche 1 bis 15 umfasst.

17. Elektronische Vorrichtung, wobei die elektronische Vorrichtung die Kameraeinrichtung nach Anspruch 16 umfasst.

## Revendications

1. Moteur d'entraînement à ouverture variable, dans lequel le moteur d'entraînement à ouverture variable comprend :
un ensemble de base (10), l'ensemble de base (10) étant pourvu d'une cavité de logement ;
un corps de support de lentille (20), au moins une partie du corps de support de lentille (20) étant disposée de manière mobile à l'intérieur de la cavité de logement ;
des aimants d'entraînement (30), dans lequel il y a une pluralité d'aimants d'entraînement (30), les aimants d'entraînement (30) sont disposés sur une paroi latérale circonférentielle du corps de support de lentille (20), et au moins deux aimants d'entraînement (30) de la pluralité d'aimants d'entraînement (30) sont disposés symétriquement par rapport au corps de support de lentille (20)
des bobines d'entraînement (40), dans lequel il y a une pluralité de bobines d'entraînement (40),
les bobines d'entraînement (40) sont disposées sur une paroi latérale de l'ensemble de base (10) correspondant aux aimants d'entraînement (30), et les aimants d'entraînement (30) et les bobines d'entraînement (40) sont induits relativement de sorte que le corps de support de lentille (20) tourne par rapport à l'ensemble de base (10) ;
un ensemble de lames (50), une première extrémité de l'ensemble de lames (50) étant disposée sur une extrémité supérieure de l'ensemble de base (10), et une deuxième extrémité de l'ensemble de lames (50) étant connectée au corps de support de lentille (20), de sorte que la deuxième extrémité de l'ensemble de lames (50) est capable de tourner par rapport à la première extrémité de l'ensemble de lames (50) ; et
des premières plaques d'attraction magnétique (60), dans lequel il y a une pluralité de premières plaques d'attraction magnétique (60), et les plaques d'attraction magnétique (60) sont disposées sur une extrémité inférieure de l'ensemble de base (10) correspondant aux aimants d'entraînement (30).

2. Moteur d'entraînement à ouverture variable selon la revendication 1, dans lequel il y a un espace de rotation entre le corps de support de lentille (20) et l'ensemble de base (10).

3. Moteur d'entraînement à ouverture variable selon la revendication 1, dans lequel le moteur d'entraînement à ouverture variable comprend en outre une deuxième plaque d'attraction magnétique (70), la deuxième plaque d'attraction magnétique (70) est disposée sur un côté de la bobine d'entraînement (40) éloigné de l'aimant d'entraînement (30) correspondant à l'aimant d'entraînement (30), et la deuxième plaque d'attraction magnétique (70) est située sur un côté de l'ensemble de base (10).

4. Moteur d'entraînement à ouverture variable selon la revendication 3, dans lequel
dans une direction d'axe optique du moteur d'entraînement à ouverture variable, une distance du centre de la deuxième plaque d'attraction magnétique (70) à une extrémité de l'aimant d'entraînement (30) est égale à une distance à l'autre extrémité de celui-ci ; et/ou
la deuxième plaque d'attraction magnétique (70) comprend une zone magnétique (71) et une zone non-magnétique (72), une surface de la zone non-magnétique (72) est plus grande qu'une surface de la zone magnétique (71), et la zone magnétique (71) et la zone non-magnétique (72) sont disposées séquentiellement dans une direction de rotation du corps de support de lentille (20).

5. Moteur d'entraînement à ouverture variable selon la revendication 3, dans lequel le moteur d'entraînement à ouverture variable comprend en outre une carte FPC (80), la carte FPC (80) est disposée autour d'une paroi latérale circonférentielle de l'ensemble de base (10), une paroi latérale circonférentielle de l'ensemble de base (10) est pourvue d'une ouverture de montage (11), la bobine d'entraînement (40) est disposée sur l'ouverture de montage (11) et est connectée à la carte FPC (80), et la deuxième plaque d'attraction magnétique (70) est disposée sur un côté de la carte FPC (80) éloigné de la bobine d'entraînement (40).

6. Moteur d'entraînement à ouverture variable selon la revendication 5, dans lequel le moteur d'entraînement à ouverture variable comprend en outre un condensateur et une puce Hall (82), et le condensateur et la puce Hall (82) sont tous deux disposés sur un côté de la carte FPC (80) proche de la bobine d'entraînement (40) correspondant à l'aimant d'entraînement (30).

7. Moteur d'entraînement à ouverture variable selon la revendication 6, dans lequel le nombre des aimants d'entraînement (30) et le nombre des bobines d'entraînement (40) sont tous deux de deux, le nombre de la deuxième plaque d'attraction magnétique (70) est de un, l'une des bobines d'entraînement (40) correspond à la deuxième plaque d'attraction magnétique (70), et l'autre bobine d'entraînement (40) correspond au condensateur et à la puce Hall (82).

8. Moteur d'entraînement à ouverture variable selon la revendication 1, dans lequel le moteur d'entraînement à ouverture variable comprend en outre une pluralité de billes (90), le corps de support de lentille (20) est pourvu d'une pluralité de rainures de logement (21) pour loger les billes (90), et la paroi latérale de l'ensemble de base (10) est pourvue d'une pluralité de rainures de glissement (12) qui s'étendent dans une direction de rotation du corps de support de lentille (20) correspondant aux rainures de logement (21).

9. Moteur d'entraînement à ouverture variable selon la revendication 8, dans lequel certaines rainures de logement (21) de la pluralité de rainures de logement (21) sont chacune pourvues d'au moins deux des billes (90) à l'intérieur, et les billes (90) dans la même rainure de logement (21) sont disposées dans la direction axiale du corps de support de lentille (20).

10. Moteur d'entraînement à ouverture variable selon la revendication 8, dans lequel la pluralité de rainures de logement (21) sont groupées par paires, et au moins un groupe de rainures de logement (21) est disposé symétriquement sur deux côtés du même aimant d'entraînement (30).

11. Moteur d'entraînement à ouverture variable selon la revendication 10, dans lequel le nombre des rainures de logement (21) est de six, les rainures de logement (21) sont divisées en trois groupes, le premier groupe des rainures de logement (21) et le troisième groupe des rainures de logement (21) sont disposés symétriquement par rapport au centre du corps de support de lentille (20), et
les deux rainures de logement (21) du deuxième groupe sont respectivement disposées sur les côtés où les deux rainures de logement (21) du premier groupe sont éloignées l'une de l'autre ; ou les deux rainures de logement (21) du deuxième groupe sont respectivement disposées sur les côtés où les deux rainures de logement (21) du premier groupe sont proches l'une de l'autre.

12. Moteur d'entraînement à ouverture variable selon la revendication 11, dans lequel
un angle entre une ligne de connexion entre l'une des deux rainures de logement (21) du deuxième groupe et le centre du corps de support de lentille (20) et une ligne de connexion entre l'autre et le centre est inférieur ou égal à 130 degrés ; et/ou
les rainures de logement (21) du premier groupe et les rainures de logement (21) du troisième groupe sont chacune pourvues d'une bille (90) à l'intérieur, et les rainures de logement (21) du deuxième groupe sont chacune pourvues de deux billes (90) à l'intérieur ; et/ou
les centres sphériques des billes (90) dans les rainures de logement (21) du premier groupe et les centres sphériques des billes (90) dans les rainures de logement (21) du troisième groupe sont situés sur le même plan, et le plan est perpendiculaire à un axe optique du moteur d'entraînement à ouverture variable ; et/ou
les rainures de logement (21) du premier groupe sont proches de l'extrémité supérieure de l'ensemble de base (10) par rapport à l'extrémité inférieure de l'ensemble de base (10), et les rainures de logement (21) du troisième groupe sont proches de l'extrémité supérieure de l'ensemble de base (10) par rapport à l'extrémité inférieure de l'ensemble de base (10).

13. Moteur d'entraînement à ouverture variable selon l'une quelconque des revendications 1 à 12, dans lequel l'ensemble de base (10) comprend :
une base (13), la base (13) étant pourvue d'une cavité de logement, et une paroi latérale circonférentielle de la base (13) étant pourvue d'une ouverture de montage (11) ; et
un cadre (14), le cadre (14) étant disposé sur la base (13), et l'ensemble de lames (50) étant connecté au cadre (14).

14. Moteur d'entraînement à ouverture variable selon la revendication 13, dans lequel un côté de la base (13) faisant face au cadre (14) est pourvu de premières rainures de distribution de colle (131) ; et/ou
un côté de la base (13) faisant face au cadre (14) est pourvu de trous de montage (132), et le cadre (14) est pourvu de montants de montage (141) correspondant aux trous de montage (132) ; et/ou la paroi latérale circonférentielle de la base (13) est pourvue de premières rainures de distribution de colle (131) ; et/ou la paroi latérale circonférentielle de la base (13) est pourvue de montants de fixation (133), et la carte FPC (80) est pourvue de trous de fixation (83) correspondant aux montants de fixation (133) ; et/ou
la base (13) a une forme cylindrique et est disposée pour entourer un côté périphérique externe du corps de support de lentille (20) ; et/ou
le cadre (14) a une forme annulaire et est disposé sur une extrémité supérieure de la base (13) ; et/ou
le moteur d'entraînement à ouverture variable comprend en outre une broche de borne (100), au moins une partie de la broche de borne (100) est intégrée dans la base (13), l'autre partie de la broche de borne (100) fait saillie de l'extrémité de la base (13) éloignée du cadre (14), et l'autre partie de la broche de borne (100) fait saillie dans une direction éloignée du cadre (14) ; et/ou
une paroi interne d'un côté de la base (13) éloigné du cadre (14) est pourvue de bossages de limitation (134), le corps de support de lentille (20) est pourvu de rainures de limitation (22) correspondant aux bossages de limitation (134), et les rainures de limitation (22) s'étendent dans une direction de rotation du corps de support de lentille (20) ; et/ou
le moteur d'entraînement à ouverture variable comprend en outre :
une plaque de recouvrement (200), la plaque de recouvrement (200) recouvrant un côté du cadre (14) éloigné de la base (13), l'ensemble de lames (50) étant situé entre la plaque de recouvrement (200) et le cadre (14), et l'ensemble de base (10) étant pourvu de montants de limitation (142) correspondant respectivement à la plaque de recouvrement (200) et à l'ensemble de lames (50) ; et
un joint (300), le joint (300) étant disposé entre l'ensemble de lames (50) et le corps de support de lentille (20), et le corps de support de lentille (20) étant pourvu de deuxièmes rainures de distribution de colle (23) correspondant au joint (300).

15. Moteur d'entraînement à ouverture variable selon l'une quelconque des revendications 1 à 12, dans lequel
chacun des aimants d'entraînement (30) est formé par empilement d'au moins deux bandes magnétiques ; ou les aimants d'entraînement (30) sont des aimants magnétisés à plusieurs étages ; et/ou
le moteur d'entraînement à ouverture variable comprend en outre des feuilles de blocage magnétique (400), et les feuilles de blocage magnétique (400) sont disposées entre le corps de support de lentille (20) et les aimants d'entraînement (30).

16. Appareil photographique, dans lequel l'appareil photographique comprend le moteur d'entraînement à ouverture variable selon l'une quelconque des revendications 1 à 15.

17. Dispositif électronique, dans lequel le dispositif électronique comprend l'appareil photographique selon la revendication 16.
